# EUROPEAN PATENT APPLICATION

(11) **EP 3 096 412 A1**
(43) Date of publication of application: **23.11.2016**
(21) Application number: 15736901.8
(22) Date of filing: 16.01.2015
(51) Int. Cl.: H01R 13/631

(54) **PLATE FOR FACILITATING THE CONNECTION OF COUPLING PARTS**

(30) Priority: 18.01.2014 ES 201430063
(71) Applicant: Villacorta Atienza, José Antonio, 28220 Majadahonda (ES)
(72) Inventor: VILLACORTA ATIENZA, Carlos, E-28017 Madrid (ES)
(74) Representative: Ungria López, Javier
(86) International application number: PCT/ES2015/070026
(87) International publication number: WO 2015/107248

(57) **Abstract**

The aim of the invention is to facilitate the connection of a plug (or male coupling part) to an electrical outlet (or female coupling part) of type "F" (Schuko) and type "C" (Europlug). The invention relates to a plate comprising two conical recesses (1) around the two connection openings (2). The conical recesses allow the pins of the plug to slide into a position where they face said openings, thereby facilitating the connection between male and female coupling parts. The device is designed so as to be able to be coupled to current sockets (3, 4), but the design of the conical recesses could also be incorporated into the actual sockets which would be produced using said innovation.

## Description

### SECTOR OF THE ART

The present invention belongs to the sector of household electrical mechanisms.

### STATE OF THE ART

With the current design of household plugs [called "Type F" (or Schuko) and "Type C" (or Europlug), which are the standard in Spain and in most of Europe], it is not always easy to connect a male and female coupling part. This daily operation is, at least, inconvenient, and is complicated in poor visibility conditions or if the plug is in an area difficult to access.

### DETAILED DESCIPTION OF THE INVENTION

The aim of this invention is to facilitate the operation of connecting a plug (or male coupling part) to an electrical outlet (or female coupling part), allowing said connection to be quick, simple and convenient.

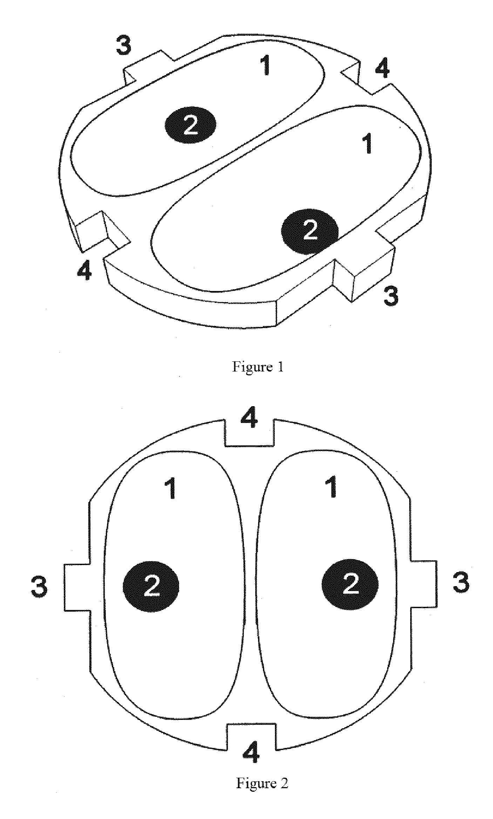

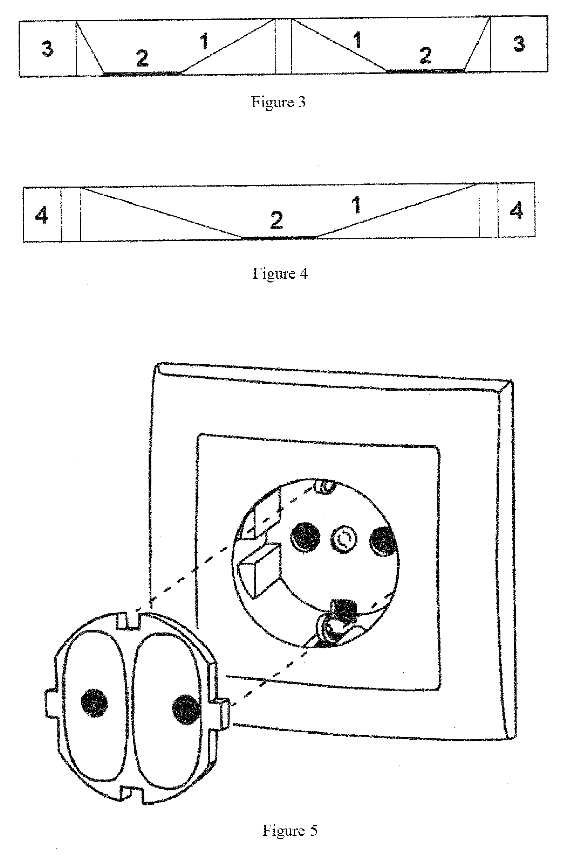

Said invention consists of a plate (see Fig. 1) having two conical recesses (1) around the two connection openings (2) through which the pins of the plug will slide into a position where they face said opening, thereby facilitating the connection between male and female coupling parts. The plate is inserted in the electrical outlet (see Fig. 5) and is intended for plugs of "Type F" (or Schuko) and plugs of "Type C" (or Europlug). In order to adapt to these, the plate has, on its vertical axis, two recesses (4) for the earth pins of female coupling parts of "Type F" to pass through and two protuberances on the horizontal axis (3) in order to fit into "Type F" sockets. The final fixation of the plate to the electrical outlets could be, for example, by means of a double-sided adhesive which allows the non-definitive installation of the device, in case the user wishes to disassemble it in the future.

### DESCRIPTION OF THE DRAWINGS

**Figure 1** shows a perspective view of the plate, as follows:
   - 1: Conical recesses for guiding the pins of the male coupling part,
   - 2: Openings for the passage of the pins of the male coupling part,
   - 3: Necessary protuberances for fitting into female coupling parts of "Type F" (or Schuko),
   - 4: Necessary recesses for the earth pins of the female coupling parts of "Type F" (or Schuko);
**Figure 2** shows a top view of the plate;
**Figure 3** shows a cutaway view above the horizontal axis of the plate;
**Figure 4** shows a cutaway view above the vertical axis of the plate;
**Figure 5** shows a diagram showing the installation of the plate in the electrical outlet (or female coupling part);
**Figure 6** shows a view of the electrical outlet (or female coupling part) with the plate already installed; and
**Figure 7** shows an electrical outlet (or female coupling part) with the plate included in its design.

### EMBODIMENTS OF THE INVENTION

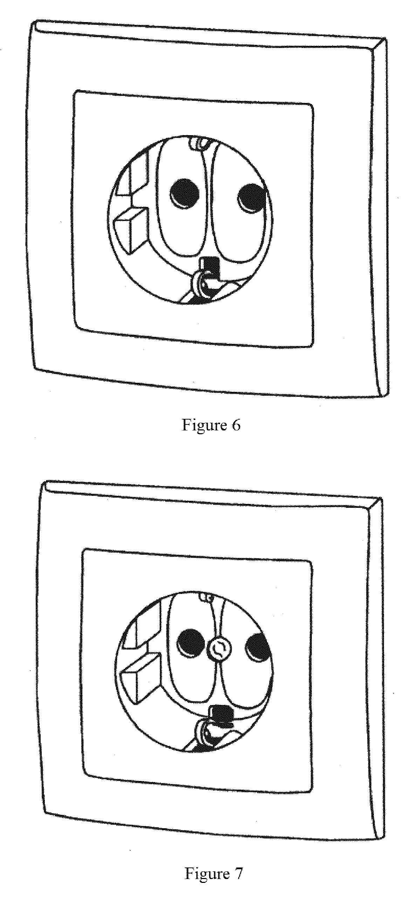

1.- Manufacture of a plate (from plastic, resin or any other appropriate material) such as that described and represented in Fig. 1. Said plate makes it possible to apply the idea to plugs already manufactured following the traditional design.
2.- Modification of the in-factory design of the female coupling parts to endow them with the idea at origin; to this end, it would suffice to include the conical recesses (1) on the base of the electrical outlets, both in those of "Type F" and in those of "Type C" (see Fig. 7).

Both forms of application are, evidently, suitable not only for embedded and surface electrical outlets, but also for those included in cable connections of the "multiple connection" type, extensions or any other presentation of the electrical outlets.

## Claims

1. Plate for facilitating the connection of male coupling parts to female coupling parts **comprising:**
- Two conical recesses (1) around two connection openings (2) of the female coupling part through which the pins of the male coupling part will slide.

2. Plate for facilitating the connection of male coupling parts to female coupling parts according to claim 1, **characterised in that:**
- Its contour coincides with that of the inner perimeter of a standard female coupling part of "Type F", such as to fit into it.
- Its thickness is such as to allow the conical recesses to fulfil their function without preventing the pins of the male coupling part from coming into contact with the connections of the female coupling part.
- It has two openings (2) for the passage of the pins of the male coupling part.
- It has two recesses (4) on its vertical axis for the passage of the earth pins of the female coupling parts of "Type F".
- It has two protuberances (3) on its horizontal axis, necessary for the device to fit into the female coupling parts of "Type F".

3. A female coupling part for facilitating the connection of male coupling parts, according to claim 1, **characterised in that:**
- The conical recesses form an inseparable part of the design of the base of the female coupling part.
